# EUROPÄISCHE PATENTSCHRIFT

(11) **EP 1 114 396 B1**
(45) Veröffentlichungstag und Bekanntmachung des Hinweises auf die Patenterteilung: **27.11.2002**
(21) Anmeldenummer: 99969167.8
(22) Anmeldetag: 10.09.1999
(51) Int. Cl.: G06K 19/07, D06F 93/00

(54) **PRODUKTPFLEGEKENNZEICHEN FÜR TEXTILIEN UND VERFAHREN ZU SEINER HERSTELLUNG**
PRODUCT CARE LABEL FOR TEXTILES AND A METHOD FOR THE PRODUCTION THEREOF
ETIQUETTE D'ENTRETIEN POUR TEXTILES ET PROCEDE PERMETTANT DE LA PRODUIRE

(30) Priorität: 14.09.1998 DE 19842366
(43) Veröffentlichungstag der Anmeldung: 11.07.2001
(73) Patentinhaber: BSH Bosch und Siemens Hausgeräte GmbH, 81669 München (DE)
(72) Erfinder: DULDHARDT, Marianne, D-10969 Berlin (DE)
(86) Internationale Anmeldenummer: EP9906710
(87) Internationale Veröffentlichungsnummer: WO00016254

(56) Entgegenhaltungen:
- EP-A- 0 680 012
- DE-A- 4 309 914
- US-A- 5 756 986

## Beschreibung

Die vorliegende Erfindung betrifft ein zur Anbringung an einem textilen Produkt bestimmtes Produktpflegekennzeichen mit einem textilen Trägerteil, das aufgedruckte oder eingewebte Pflegehinweise aufweist, die durch das menschliche Auge lesbare Informationen über eine geeignete Pflege des textilen Produkts enthalten.

Die Behandlung von Textilien, insbesondere aber das Waschen und Trocknen von Bekleidungsstücken gehört zu den häufig anfallenden Aufgaben des täglichen Lebens. Diese routinemäßig durchgeführten Reinigungsprozesse müssen möglichst optimal ablaufen, um die Werterhaltung der Textilien sicherzustellen. Durch falsche Behandlung können Bekleidungsstücke nicht nur beschädigt sondern im extremen Fall auch vollständig zerstört werden. Aus Kostengründen aber auch um Zeit zu sparen, werden Wäschestücke nicht einzeln behandelt, sondern zu sogenannten Wäscheposten zusammengefasst. Die so kombinierten Wäschestücke werden anschließend gemeinsam in der Waschmaschine gewaschen. Beim Zusammenstellen solcher Wäscheposten ist es von großer Bedeutung, dass nur Textilen zusammengefasst werden, die gleiche oder ähnliche Eigenschaften der Stoffart, der erlaubten Waschtemperatur oder der Farbe aufweisen, damit eine Veränderung der Textilien wie, z. B., Ausfärben, Schrumpfen oder Verfilzen beim Waschen vermieden werden kann.

Neue Stoffzusammensetzungen wie, z. B., Kombinationen aus den Naturprodukten Seide und Leinen, die beide für sich alleine völlig unterschiedliche Pflegeprofile aufweisen, erfordern für ihre sachgemäße und werterhaltende Pflege ein immer umfangreicheres Fachwissen des Benutzers. Ähnlich verhält es sich mit modernen Mikrofasern und Goretex®-Materialien, die hauptsächlich für die Herstellung von Sport- und Freizeitbekleidung verwendet werden. Diese Materialen verbinden die vorteilhaften Merkmale verschiedenster herkömmlicher Stoffe wie, z. B., geringes Gewicht, hohen Tragekomfort und Atmungsaktivität mit der Möglichkeit, die Wäschestücke in der häuslichen Waschmaschine zu reinigen.

Um Textilien mit verschiedenen Farben und Stoffzusammensetzungen einem möglichst optimalen Reinigungsprozess zuführen zu können und damit ihren unterschiedlichen Pflegeanforderungen gerecht zu werden, existieren seit langem Produktpflegekennzeichen. Diese bestehen zumeist aus Textil- oder Kunststoff-Streifen oder -Schildern, in die bei dem Herstellungsprozess Pflegehinweise in Form von Symbolen eingedruckt, eingewebt, oder eingestickt werden und die Behandlungshinweise für das zugehörige Textilprodukt beinhalten. Beispielweise werden Pflegesymbole verwendet, welche die maximale Waschlaugen- oder Bügeltemperatur definieren oder aber Handwäsche oder chemische Reinigung empfehlen oder ausschließen. Diese Pflegekennzeichen werden an verdeckter Stelle, bevorzugt an der Innenseite eines Bekleidungsstücks, z. B. an der Naht eines Hemdes, eingenäht. Diese Pflegekennzeichen müssen vom Benutzer gelesen und ihre Angaben gedeutet werden. Es existieren jedoch, bedingt durch die unterschiedlichen Gewebezusammensetzungen und Farben, viele verschiedene Pflegesymbole, deren Sinngehalt dem Benutzer nicht immer bekannt ist. Eine genaue Klärung der Bedeutung der Pflegesymbole gestaltet sich in der Praxis meist schwierig, was in der Regel dazu führt, dass unbekannte Pflegesymbole ignoriert werden und das Wäschestück einem vermeintlich gleichartigen Wäscheposten hinzugefügt wird. Das anschließend gewählte Behandlungsprogramm der Waschmaschine kann sich aber als ungeeignet herausstellen und das einzelne Wäschestück oder im Extremfall, z. B. durch Ausfärben, der gesamte Wäscheposten beschädigt werden.

Zur Identifizierung von Bekleidungsstücken sind in der Textilindustrie maschinenlesbare elektronische Speicherelemente, sogenannte Transponder bekannt (EP 680 012 A2 und US 5 756 986 A), die Informationen über das textile Produkt enthalten. Über ein elektromagnetisches Feld wird in dem Transponder eine Spannung induziert, die dafür sorgt, dass er die gespeicherten Informationen aussendet, die anschließend von einem entsprechenden Empfangsgerät verarbeitet werden können. Mittels einer Kette von Lese- und Empfangsgeräten kann der Vertriebsweg von auf diese Weise markierten Bekleidungsstücken vom Hersteller über mehrere Zwischenhändler bis zum Endverkäufer nachvollzogen werden. Solche Bekleidungsstücke sind mit herkömmlichen Produktpflegekennzeichen versehen, die für den Benutzer essentielle Informationen über die Pflegeanforderungen des textilen Produkts in aufgedruckter, eingewebter oder eingestickter Form enthalten. Zusätzlich sind diese Informationen in kompakter Form in dem Transponder gespeichert, die beim Auslesen zusammen in eine Abfrageeinheit übertragen werden. Die Unterbringung aller Produktpflege-Informationen in einem solchen Transponder erfordern einen erheblichen räumlichen Aufwand für den Transponder, so dass er die Flexibilität des textilen Produkts und, sofern es sich bei dem textilen Produkt um ein Wäschestück handelt, seinen Tragekomfort erheblich beeinträchtigt. Von besonderem Nachteil ist ferner, dass Transponder und herkömmliche Produktpflegekennzeichen bisher in zwei getrennten und dadurch kostenintensiven Arbeitsschritten am textilen Produkt angebracht werden müssen.

Der vorliegenden Erfindung liegt die Aufgabe zugrunde, ein Produktpflegekennzeichen und ein Verfahren zu seiner Herstellung zu schaffen, mit dem es möglich wird, Produktpflegekennzeichen und Transponder auf einfachste Weise gleichzeitig an textilen Produkten zu befestigen, ohne dass deren Flexibilität und Tragekomfort wesentlich beeinträchtigt werden.

Diese Aufgabe wird durch die Merkmale der Ansprüche 1 bzw. 5 gelöst.

Erfindungsgemäß wird ein Produktpflegekennzeichen der eingangs genannten Art geschaffen, wobei für jeden Pflegehinweis ein eigener, ein elektronisches Bauelement aufweisender Transponder auf dem Produktpflegekennzeichen aufgetragen bzw. aufgedruckt ist, der dem Pflegehinweis bzw. den Pflegehinweisen entsprechende Informationlen enthält. Auf diese Weise ist es möglich, Transponder in einem einzigen Verfahrensschritt gleichzeitig mit dem Pflegekennzeichen an dem textilen Produkt anzubringen.

Durch ein geeignetes Haushaltsgerät wie, z. B., eine Waschmaschine oder ein Wäschetrockner, das über ein integriertes oder getrenntes Lesegerät für die Transponderinformationen verfügt, kann ein Behandlungsvorgang automatisch gestartet werden, wenn dieser nach dem Lesen der Informationen aus den Transpondern optimal auf den zu behandelnden Wäscheposten abgestimmt ist. Dadurch muss sich der Benutzer nicht selbst um das Einlesen der Information bemühen. Besonders vorteilhaft ist die erfindungsgemäße Zuordnung jeweils eines eigenen Transponders zu jedem-Pflegesymbol. Da auf den Produktpflegekennzeichen meist mehrere Pflegesymbole aufgedruckt sind, die dem Benutzer verschiedene Pflegehinweise über das textile Produkt mitteilen, kann das textile Produkt oder das Pflegekennzeichen dennoch flexibel und angenehm zu tragen bleiben, weil die einzelnen Transponder klein und gut gegeneinander beweglich sind. Außerdem ist durch die erfindungsgemäße Maßnahme der Vorrat an unterschiedlichen vorzuhaltenden Transpondern erheblich kleiner als beim Stand der Technik.

Manche Pflegesymbole wie, z.B., das Symbol, das die maximale Temperatur der Waschlauge anzeigt, werden öfter benutzt und sind deshalb bekannter als andere Unbekannte Pflegesymbole werden vom Benutzer aus Bequemlichkeit häufig ignoriert, zumal sich die Klärung der genauen Bedeutung der Pflegesymbole in der täglichen Praxis oft schwierig gestaltet. Durch je eine einzelne Information in jedem Transponder werden alle Pflegekennzeichen des Wäschestücks vom Haushaltgerät einzeln erfasst, so dass der laienhafte Benutzer keine Gefahr läuft, den Wäscheposten durch ein nicht zu den anderen texilen Produkten passendes Wäschestück zu verderben. Ein ungeeignetes, vom Benutzer gewähltes Pflegeprogramm wird nicht gestartet bzw. er wird auf die falsche Auswahl hingewiesen.

Der Transponder kann einen flachen Chip oder eine Spule aufweisen, was den Vorteil hat, daß er sehr klein und gut handhabbar ist. Durch die geringe Größe und Unauffälligkeit wird garantiert, daß der Transponder den Tragekomfort des auf diese Weise gekennzeichneten Bekleidungsstücks nicht beeinträchtigt. Darüberhinaus bietet ein solcher Transponder den Vorteil, daß er sehr kostengünstig und in großer Zahl gefertigt werden kann, so daß der Preis eines textilen Produktes durch die Verwendung von Transpondern zur Kennzeichnung nicht erhöht werden muß.

Vorteilhaft ist es des weiteren, wenn für die Ummantelung des Chips bzw. der Spule des Transponders ein besonders widerstandsfähiges Material, wie z. B. Kunstharz verwendet wird. Auf diese Weise wird ein Transponder geschaffen, der selbst gegen aggressive Waschlauge oder höchste Wasch- und Bügeltemperaturen unempfindlich ist. Das innere empfindlichere Speicherelement des Transponders wird durch eine solche Ausgestaltung optimal vor allen äußeren Einflüssen wie, z. B., Zerkratzen oder Zerdrücken geschützt.

Die Erfindung betrifft ebenfalls ein Verfahren zur Herstellung eines Produktpflegekennzeichens für Textilien gemäß Anspruch 5.

Besonders vorteilhaft ist, wenn der flache Chip bzw. die flache Spule in eine Kunstharzummantelung eingedrückt bzw. eingebracht wird, da das Kunstharz die nötige Festigkeit gegen mechanische und thermische Beanspruchung aufweist.

Der Transponder kann mit Hilfe eines Klebstoffs auf bzw. an dem Trägerteil befestigt werden. Dadurch wird sichergestellt, daß sich der Transponder beim Waschen und Schleudern nicht von dem Produktpflegekennzeichen ablöst. Auf diese Weise wird wirkungsvoll verhindert, daß die im Transponder enthaltene Information für den Benutzer verlorengeht.

Weitere Einzelheiten, Merkmale und Vorteile der vorliegenden Erfindung ergeben sich aus der nachfolgenden Beschreibung einer bevorzugten Ausführungsform des erfindungsgemäßen Produkts und der Durchführung des erfindungsgemäßen Verfahrens unter Bezugnahme auf die Zeichnungen. In denen zeigen
- Fig. 1: ein zu behandelndes textiles Produkt mit einem eingenähten, erfindungsgemäßen Produktpflegekennzeichen,
- Fig. 2: ein Produktpflegekennzeichen zur Kennzeichnung des textilen Produktes aus Fig. 1 mit Pflegesymbolen und Transpondem.

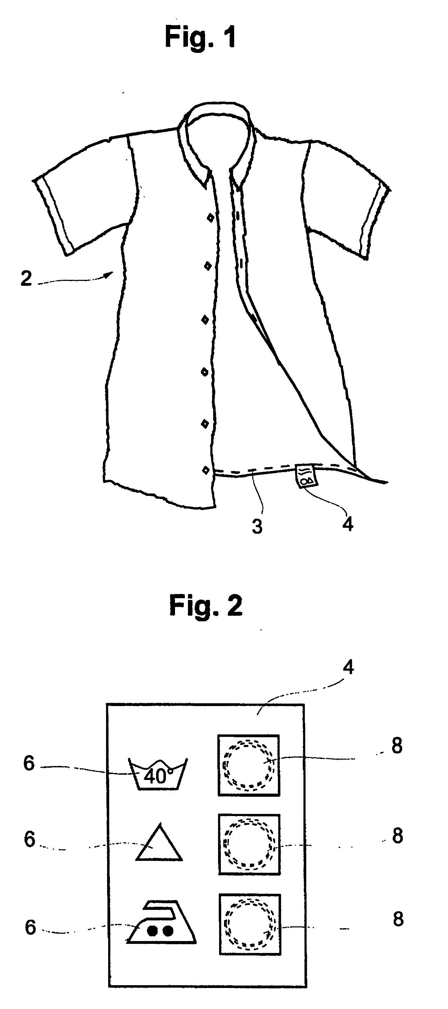

In Fig. 1 ist ein waschbares textiles Produkt 2 abgebildet, das in diesem Fall ein weißes Hemd darstellt. Dieses textile Produkt 2 ist an einer innenliegenden Naht 3 mit einem Produktpflegekennzeichen 4 versehen.

Fig. 2 zeigt in vergrößertem Maßstab das Produktpflegekennzeichen 4, das im vorliegenden Beispiel drei Pflegesymbole 6 aufweist, die sich auf die Waschtemperatur, auf den Bleichvorgang und auf die Bügeltemperatur beziehen. Außerdem weist das Produktpflegekennzeichen 4 drei Transponder 8 auf, von denen jeder einem der Pflegesymbole 6 zugeordnet ist.

Aufgrund der Anordnung eines separaten Transponders 8 pro Pflegesymbol 6 wird auch die Flexibilität in der Herstellung erhöht. Da sich bei den unterschiedlichen Textilien oft nur wenige Pflegekennzeichen gegenüber anderen ändern, müssen dann auch nur wenige der Transponder 8 durch passende ersetzt werden. Dadurch kann es weiter zu einer kostengünstigen Massenherstellung der einzelnen Transponder 8 kommen.

Solche Transponder können bei der Herstellung der Pflegekennzeichen im selben Arbeitsgang mit dem Aufdrucken der Pflegehinweise oder -symbole auf die Gewebestreifen in der Weise aufgetragen werden, daß zunächst ein Harztropfen auf der zutreffende Stelle des Gewebes aufgetragen wird, der teilweise in das Gewebe eindringt. Danach wird eine sehr dünne Transponderscheibe aufgelegt und anschließend mit einem zweiten Harztropfen bedeckt. dabei können sich die beiden Harztropfen miteinander verbinden, wenn ihre Ränder über den Transponder hinausragen und dadurch diesen schließlich im zusammengeflossenen Harztropfen einschließen. Von besonderem Vorteil für den Tragekomfort des Kleidungsstückes und für die Haltbarkeit des Transponders ist es, wenn dieser aus flexiblen Werkstoffen hergestellt ist.

## Patentansprüche

1. Zur Anbringung an einem textilen Produkt (2) bestimmtes Produktpflegekennzeichen (4) mit einem textilen Trägerteil, das aufgedruckte oder eingewebte Pflegehinweise (6) aufweist, die durch das menschliche Auge lesbare Informationen über eine geeignete Pflege des textilen Produkts (2) enthalten, **dadurch gekennzeichnet, dass** für jeden Pflegehinweis (6) ein eigener, ein elektronisches Bauelement aufweisender Transponder (8) auf dem Produkt-pflegekennzeichen (4) aufgetragen bzw. aufgedruckt ist, der dem jeweiligen Pflegehinweis (6) entsprechende Information enthält.

2. Produktpflegekennzeichen nach Anspruch 1, **dadurch gekennzeichnet, dass** das elektronische Bauelement des Transponders (8) als flacher Chip ausgebildet ist.

3. Produktpflegekennzeichen nach Anspruch 1, **dadurch gekennzeichnet, dass** das elektronische Bauelement des Transponders (8) als flache Spule ausgebildet ist.

4. Produktpflegekennzeichen nach einem der Ansprüche 1 bis 3, **dadurch gekennzeichnet, dass** der Transponder (8) eine Kunstharzummantelung des elektronischen Bauelements aufweist.

5. Verfahren zur Herstellung eines Produktpflegekennzeichens (4) für Textilien gemäß einem der Ansprüche 1 bis 4, bei dem Pflegesymbole und/oder -hinweise (6) auf ein Trägerband, insbesondere auf ein Textil- oder Kunststoffbann gedruckt werden, **dadurch gekennzeichnet, dass** die Transponder (8) im selben Arbeitsgang mit dem Drucken auf das Trägerband aufgetragen bzw. aufgedruckt werden.

6. Verfahren nach Anspruch 5, **dadurch gekennzeichnet, dass** der flache Chip bzw. die flache Spule in eine Kunstharzummantelung eingedrückt bzw. eingebracht wird.

7. Verfahren nach Anspruch 5, **dadurch gekennzeichnet, dass** der Transponder (8) mit Hilfe eines Klebstoffs auf bzw. an dem Trägerband befestigt wird.

## Claims

1. Product care label (4), which is intended for application to a textile product (2), with a textile support part which has printed or woven care instructions (6) containing items of information, which are readable by the human eye, about suitable care of the textile product (2), **characterised in that** an individual transponder (8) comprising an electronic component is applied to or printed on the product care label (4) for each care instruction (6) and contains information corresponding to the respective care instruction (6).

2. Product care label according to claim 1, **characterised in that** the electronic component of the transponder (8) is constructed as a flat chip.

3. Product care label according to claim 1, **characterised in that** the electronic component of the transponder (8) is constructed as a flat coil.

4. Product care label according to one of claims 1 to 3, **characterised in that** the transponder (8) has a synthetic resin encapsulation of the electronic component.

5. Method of producing a product care label (4) for textiles according to one of claims 1 to 4, in which care symbols and/or care instructions (6) are printed on a support strip, particularly on a textile or synthetic material strip, **characterised in that** the transponders (8) are applied to or printed on the support strip in the same working process with the printing.

6. Method according to claim 5, **characterised in that** the flat chip or the flat coil is printed or mounted in a synthetic resin encapsulation.

7. Method according to claim 5, **characterised in that** the transponder (8) is fastened on or to the support strip with the help of an adhesive.

## Revendications

1. Étiquette d'entretien destinée à être apposée sur un produit textile (2), laquelle présente un support textile portant des consignes d'entretien (6) imprimées ou tissées qui contiennent des informations sur l'entretien convenant audit produit textile (2) et peuvent être lues par l'oeil humain, **caractérisée en ce qu'**est apposé respectivement appliqué sur l'étiquette d'entretien (4) un transpondeur (8) par consigne d'entretien (6), lequel présente un composant électronique et contient l'information correspondant à la consigne d'entretien (6) à laquelle il se rapporte.

2. Étiquette d'entretien selon la revendication 1, **caractérisée en ce que** le composant électronique du transpondeur (8) est réalisé sous la forme d'une puce plate.

3. Étiquette d'entretien selon la revendication 1, **caractérisée en ce que** le composant électronique du transpondeur (8) est réalisé sous la forme d'une bobine plate.

4. Étiquette d'entretien selon l'une des revendications 1 à 3, **caractérisée en ce que** le transpondeur (8) présente un enrobage en résine synthétique enrobant le composant électronique.

5. Procédé de fabrication d'une étiquette d'entretien (4) pour textiles selon l'une des revendications 1 à 4, dans lequel des symboles d'entretien et/ou des consignes d'entretien (6) sont appliqués sur une bandelette de support, en particulier sur une bandelette en matière textile ou plastique, **caractérisé en ce que** le transpondeur (8) est apposé respectivement appliqué sur la bandelette de support dans le cadre d'une même opération de travail que l'application.

6. Procédé selon la revendication 5, **caractérisé en ce que** la puce plate respectivement la bobine plate sont enfoncées respectivement mises dans un enrobage en résine synthétique.

7. Procédé selon la revendication 5, **caractérisé en ce que** le transpondeur (8) est fixé à l'aide d'une colle sur la bandelette de support respectivement à celle-ci.
